# EUROPEAN PATENT APPLICATION

(11) **EP 4 431 760 A1**
(43) Date of publication of application: **18.09.2024**
(21) Application number: 23162602.9
(22) Date of filing: 17.03.2023
(51) Int. Cl.: F16F 7/14, F16F 7/116

(54) **SPRING ASSEMBLY AND EQUIPMENT COMPRISING SUCH A SPRING ASSEMBLY**

(71) Applicant: Framatome GmbH, 91052 Erlangen (DE)
(72) Inventor: BUCK, Markus, 91093 HESSDORF (DE); KRELL, Matthias, 91325 ADELSDORF (DE)
(74) Representative: Lavoix

(57) **Abstract**

A spring assembly (12) configured for connecting a first component (14) to a second component (16), the spring assembly (12) comprising a first rail (20) configured to be fixed to the first component (14) and a second rail (22) facing the first rail (20), the spring assembly (12) further comprising a spring system (24) comprising a plurality of loops (26) formed by at least one wire (28) and defining a central axis (X) extending substantially parallel to the first and/or second rail (20, 22). The spring assembly (12) comprises a plurality of fixing devices (32, 33) for fixing the loops (26) to the first rail (20) and/or to the second rail (22), a diameter of each loop (26) being individually adaptable by the corresponding fixing device (32, 33) and/or the spring assembly (12) comprises a twisting mechanism.

## Description

The present invention concerns a spring assembly configured for connecting a first component to a second component.

The present invention also relates to equipment for a power plant comprising such a spring assembly.

The invention generally relates to the field of spring assemblies, forming for example tuned mass dampers configured for damping vibrations or forming vibration isolators for isolating vibrations of a component from another component. Such spring assemblies comprise for example wire springs allowing to lower or suppress vibrations and accelerations, for example of vibrating machines. Such spring assemblies are for example used in nuclear power plants or other power plants.

Generally, spring assemblies have a fixed geometry, for example with a predefined wire diameter and/or a predefined spring shape, a present thus a spring rate that is specific to this spring assembly. Therefore, for a given application, a spring assembly with a spring rate matching the corresponding application is selected.

However, in some cases, a required spring rate may be unknown before installing the spring assembly in a given facility. Thus, an installed spring assembly may not always provide optimal damping or oscillation characteristics.

In other cases, a required spring rate may change over time. For example, if a machine or component to be damped by a spring assembly forming a tuned mass damper changes its mass, this may lead to a modification of a resonance frequency of the machine or component. If the resonance frequency is to be damped, a modification of the spring rate of the tuned mass damper may be required. In such cases, the tuned mass damper may be replaced by other tuned mass damper, which is time-consuming and requires a large quantity of material.

An aim of the invention is a least to reduce the aforementioned drawbacks.

In particular, one of the aims of the invention is to provide a spring assembly having a spring rate that is easily adjustable.

For this purpose, the invention relates to a spring assembly configured for connecting a first component to a second component, the spring assembly comprising a first rail configured to be fixed to the first component and a second rail facing the first rail and configured to be fixed to the second component, the spring assembly further comprising a spring system comprising a plurality of loops formed by at least one wire and defining a central axis extending substantially parallel to the first and/or second rail.

The spring assembly comprises a plurality of fixing devices for fixing the loops to the first rail and/or to the second rail, a diameter of each loop being individually adaptable by the corresponding fixing device, and/or
the spring assembly comprises a twisting mechanism moveable around the central axis so as to twist the loops.

Thanks to these features, the spring rate is easily adjustable, because each loop is individually adaptable and/or the loops may be twisted. This modifies the spring rate. For example, by modifying a length of the wire of each loop or by modifying a number of loops of the spring system, the spring rate is adjusted.

For example, the spring assembly is adapted to be installed on equipment and the spring rate can be adjusted to an optimum value, for example by changing the diameter of each loop or of some of the loops and/or the number of the loops. For example, the spring assembly allows adjusting the spring rate so that a resonance frequency of the first and/or second component is modified or damped.

Further embodiments may relate to one or more of the following features, which may be combined in any technical feasible combination:
- each fixing device comprises at least one plate and a screw configured for applying a force to the plate so as to fix the at least one wire in a fixing position;
- the screw of each fixing device is adapted to apply the force to the plate independently of an application of a force of each screw of the other or each other fixing device of the plurality of fixing devices;
- each plate presents at least one notch adapted for receiving a part of the at least one wire;
- at least one of the fixing devices comprises two plates, each plate presenting the at least one notch, wherein the notches of the two plates face each other and receive the part of the at least one wire;
- the spring assembly further comprises a plurality of adjustment screws configured for fixing the first rail to the first component and/or the second rail to the second component;
- each loop is formed by a respective wire;
- the loops are formed by one single wire;
- the twisting mechanism comprises two discs extending parallel to each other and being fixed to respective ends of the single wire;
- the twisting mechanism further comprises a rod connecting the two discs, wherein the rod extends according to the central axis;
- the rod is configured to adjust each disc in a rotational position around the central axis and/or in a translational position along the central axis;
- the spring assembly forms a tuned mass damper configured for damping vibrations between the first component and the second component.

According to another aspect, the present invention concerns equipment for a power plant comprising a first component and a second component, further comprising a spring assembly as described above, wherein the first rail is fixed to the first component and the second rail is fixed to the second component.

These features and advantages of the invention will be further explained in the following description, given only as a non-limiting example, and with reference to the attached drawings, on which:
- Figure 1 is a schematic cross-sectional view according to a first plane of equipment comprising a spring assembly according to a first embodiment of the invention;
- Figure 2 is a schematic cross-sectional view of the equipment of Figure 1 according to a second plane A-A perpendicular to the first plane;
- Figure 3 is a schematic front view of equipment comprising a spring assembly according to a second embodiment of the invention, according to a third plane parallel to the first plane of Figure 1, and
- Figure 4 is a schematic cross-sectional view of the equipment of Figure 3 according to a fourth plane B-B perpendicular to the third plane.

### FIRST EMBODIMENT

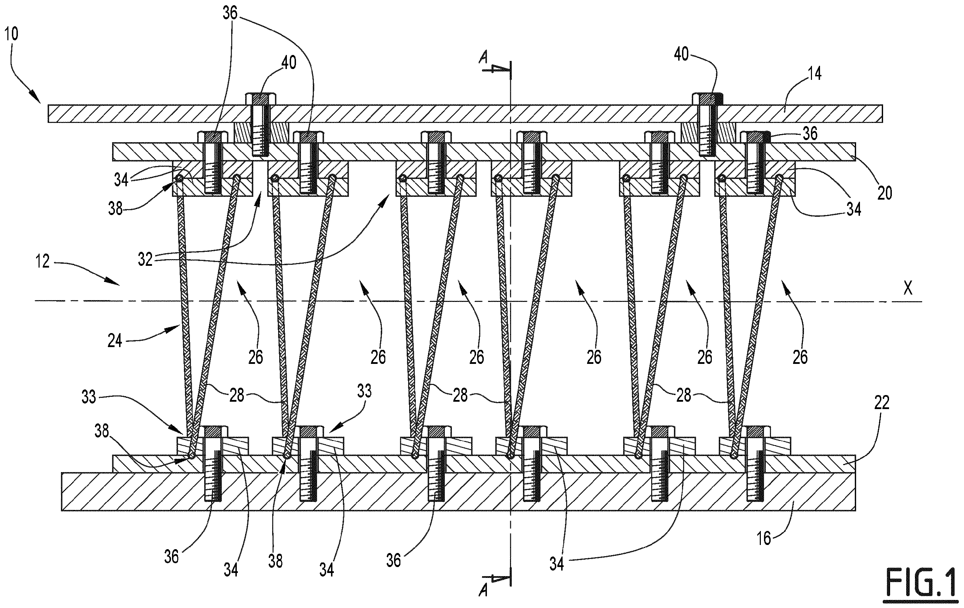

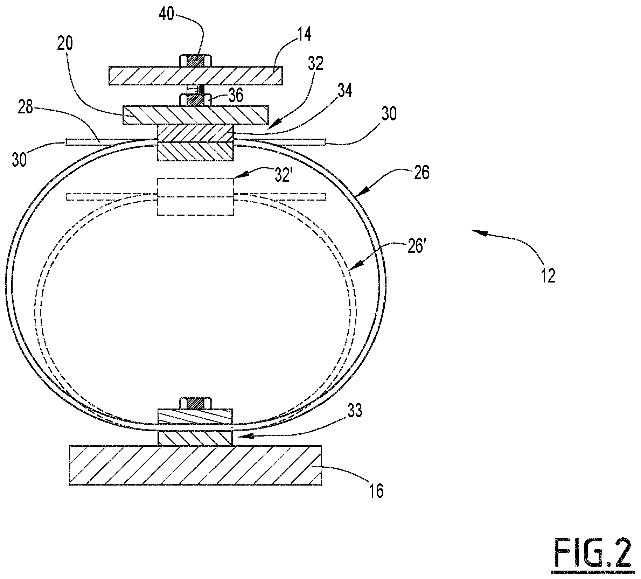

With reference to figures 1 and 2, equipment 10 for a power plant, such as for example a nuclear power plant, comprises a spring assembly 12 according to a first embodiment, a first component 14 and a second component 16.

The spring assembly 12 is configured for connecting the first component 14 to the second component 16. For example, the spring assembly forms a tuned mass damper configured for damping vibrations and/or oscillations between the first and the second component 14, 16. According to other examples, the spring assembly 12 forms an assembly configured for isolating a vibration from another system for example.

The first and/or second components 14, 16 is/are for example a part of a machine, an engine, a vessel, vibrating piping or a balance weight having a predetermined mass. The balance weight may for example be chosen so as to present a predefined resonance frequency. In this case, for example, the spring assembly 12 is adjusted so that it is configured to damp or modify the predefined resonance frequency when the balance weight, for example together with further additional components, is vibrating or oscillating.

For example, the first and/or second components 14, 16 is/are part(s) of the primary or secondary cooling circuit of the power plant, such as the nuclear power plant. According to other examples, the first and/or second components 14, 16 is/are part(s) of any other facility of the nuclear power plant.

The spring assembly 12 comprises a first rail 20 fixed to the first component 14 and a second rail 22 facing the first rail 20 and fixed to the second component 16. In the examples of the Figures 1 to 4, showing each vertical planes, the first rail 20 is an upper rail and the second rail 22 is a lower rail. Each rail 20, 22 may extend horizontally.

The spring assembly 12 further comprises a spring system 24 connecting in particular the first and the second rail 20, 22, so as to at least reduce vibrations between the first rail 20 and the second rail 22.

The spring system 24 comprises a plurality of loops 26 formed by at least one wire 28. The loops 26 define a central axis X extending substantially parallel to the first and/or second rail 20, 22. For example, the loops 26 present the form of a coil with the central axis X.

According to the first embodiment, each loop 26 is formed by a respective wire 28. In particular, each loop 26 is formed by a separate wire 28.

Preferably, the spring system 24 comprises the same number of wires 28 as loops 26. For example, with reference to Figure 1, the spring system 24 comprises six loops 26. In this case, preferably, the spring system 24 comprises six separate or individual wires 28, each forming a respective loop 26.

The or each wire 28 is in particular a steel wire or steel wire rope. The or each wire 28 presents a constant wire diameter along its length. In particular, each wire 28 presents an identical wire diameter.

Each wire 28 presents two opposite ends 30, as visible for example in Figure 2 showing in particular one of the wires 28.

Referring again to Figure 1, the spring assembly 12 comprises for example a plurality of fixing devices 32, 33 configured for fixing the loops 26 to the first rail 20 and/or to the second rail 22.

For example, the spring assembly 12 comprises, in particular for each loop 26, a first fixing device 32 and a second fixing device 33.

With reference to Figure 1, the first fixing device 32 is for example configured for fixing the wire 28 of the corresponding loop 26 to the first rail 20 and the second fixing device 33 is for example configured for fixing the wire 28 of the corresponding loop 26 to the second rail 22.

According to non-shown examples, at least one first fixing device 32 is configured for fixing the corresponding wire 28 to the second rail 22 and/or at least one second fixing device 33 is configured for fixing the corresponding wire 28 to the first rail 20. According to examples, the spring assembly 12 comprises only one of the two types of the fixing devices 32, 33, that is either the first fixing device 32 or the second fixing device 33.

A diameter of each loop 26 is individually adaptable by the corresponding fixing device 32, 33, for example by the first fixing device 32. For example, one of the fixing devices 32, 33 is adapted to modify the diameter of one of the loops 26, whilst the diameters of the other loops 26 remain constant, in particular as the wires 28 of these other loops are fixed by their respective fixing devices 32, 33. According to an example, the fixing devices 32, 33 are configured for reducing or increasing the number of loops 26 of the spring system 24 of the spring assembly 12. For example, one of the wires 26 may be released by the corresponding fixing device 32, 33 and removed from the spring assembly 12, whereas the other loops 26 remain fixed.

An example of a modification of the diameter of one of the loops 26 is now described with reference to figure 2. Figure 2 illustrates schematically the loop with two different diameters. The loop 26 with a first diameter is illustrated in continuous or solid lines, and designated by the reference 26. The same loop with a second, smaller diameter is shown in interrupted lines and designated by reference 26'. The fixing device 32, 33, such as the first fixing device 32 in the example of Figure 2, changes position between the loop 26 having the first diameter compared with the loop 26' having the second diameter. In particular, the first fixing device is designated in Figure 2 by reference 32 when the loop 26 has the first diameter and is designated by reference 32', illustrated with interrupted lines, when the loop 26' has the second diameter. Of course, other elements fixed to the fixing device 32 also change position when the diameter is modified, such as for example the first component 14 and the first rail 20. For better visibility, these elements are only illustrated once in Figure 2 for the case of the loop 26 having the first diameter, i.e. without an additional illustration of these elements with interrupted lines.

As visible in particular in Figures 1 and 2, the changed diameter is for example obtained by sliding the wire 28 through an opening defined by the first fixing device 32, 32'. In particular, a portion of the wire 28 between the respective end 30 and the fixing device 32 is shorter when the loop 26 presents the first diameter, compared with a corresponding portion of the wire when the loop 26' presents the second diameter.

Each fixing device 32, 33 comprises for example at least one plate 34 and a screw 36 for applying a force to the plate 34 so as to fix the wire 28 in a fixing position, in particular by friction and/or compression of the wire 28 between the plate 34 and another plate 34 or between the plate 34 and one of the rails 20, 22.

In particular, each screw 36 is traverses the corresponding plate 34, for example a central hole of the plate 34. Each screw 36 is received in a corresponding screw thread arranged in one of the first or second rails 20, 22 or in one of the plates 34.

In particular, the screw 36 of each fixing device 32, 33 is adapted to apply the force to the wire 28 by the intermediate of the plate 34, if the screw 36 is in a tightened position and to release the force if the screw 36 is in an unscrewed position.

Each plate 34 comprises for example at least one notch 38 adapted for receiving a part of the wire 28. Each notch 38 presents for example a geometry complementary to a geometry of the wire 28. In this case, for example, the wire 28 slides through the notch 38 upon a modification of the diameter of the loop 26 formed by the wire 28.

Preferably, the screw 36 of each fixing device 32, 33 is adapted to apply the force to the plate 34 independently of an application of a force of each screw 36 of each other fixing device 32, 33. In other words, for example, the screw 36 of one of the fixing devices 32, 33 may be unscrewed so as to allow sliding of the wire 28 and thus adaptation of the diameter of the loop 26 formed by this wire 28, while the other fixing devices 32, 33 maintain the corresponding wire(s) 28 in the corresponding fixing positions, that is in particular without change of the diameter of the other loops 26.

The or each first fixing device 32 comprises for example two plates 34, or a pair of plates. The two plates 34 comprise each the corresponding notch 38. For example, the notches 38 of the two plates 34 face each other and receive the part of the wire 28, as for example illustrated in Figure 1. According to examples, each plate 34 of the first fixing device 32 comprises two notches 38, each facing a corresponding notch 38 and receiving a corresponding part of the wire 28.

The or each second fixing device 33 comprises at least some of the features of first fixing device 32 as described below. Contrary to the first fixing device 32, each second fixing device 33 comprises one single plate 34 instead of two plates 34. The single plate 34 may comprise the notch 38. Preferably, with reference to Figure 1, the second rail 22 comprises corresponding notches 38 facing the notches 38 of each plate 34 of the second fixing device 33. In particular, a corresponding part of (one of) the wire(s) 28 is received in a space delimited by the notch 38 of the second fixing device 33 and the notch 38 of the second rail 22. This part is in particular fixed in the fixing position when the screw 36 is tightened.

According to examples, the spring assembly 12 further comprises for example a plurality of adjustment screws 40 configured for fixing the first rail 20 to the first component 14 and/or the second rail 22 to the second component 16.

In the example of Figure 1, only the first rail 20 is fixed to the first component 14 by the adjustment screws 40.

According to an example, the second rail 22 may be fixed to the second component 16 by other fixing means, such as welding, gluing or riveting. For example, the first rail 20 may also be fixed to the first component 14 by said other fixing means, in addition or as an alternative to the fixation by the adjustment screws 40.

The spring assembly 12 adapted to operate in temperatures between -100°C to +250°C.

For example, the spring assembly 12 consists of material, which presents a high radiation resistance, such as metals and/or predefined alloys.

### SECOND EMBODIMENT

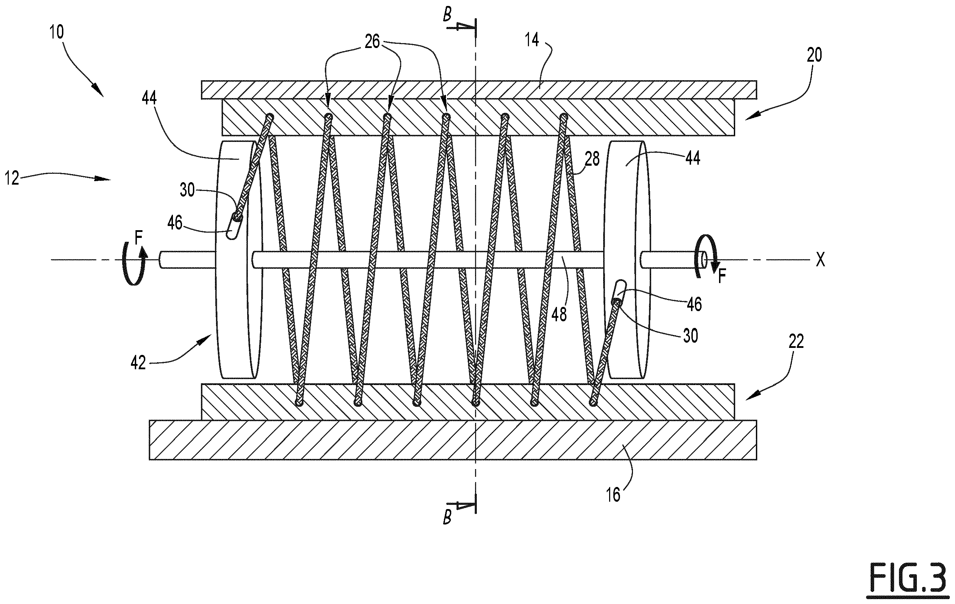

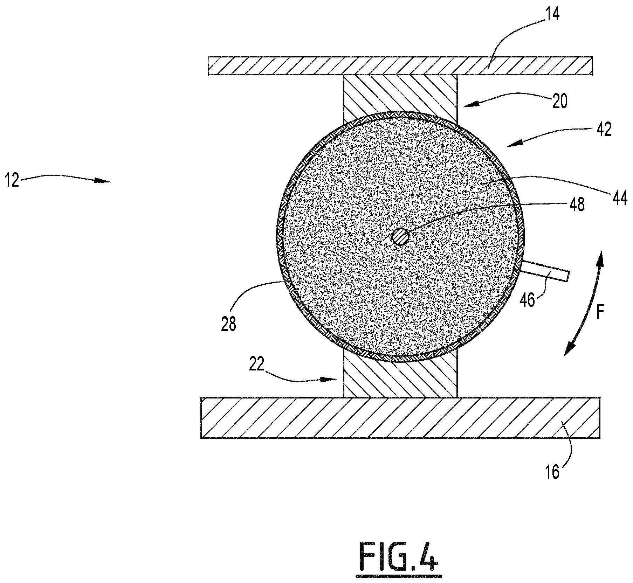

A second embodiment of equipment 1, for example equipment for the nuclear power plant, comprising the spring assembly 12 is now described with reference to Figures 3 and 4.

Equipment 1, and in particular the spring system 12, of the second embodiment comprises at least some, preferably all, features of the first embodiment. For example, the spring assembly 12 according to the second embodiment comprises the same or similar fixing devices 33, 34, which are not illustrated again in Figures 3 and 4. Only the differences between the first and second embodiment are described hereafter.

The same reference signs are used for the same, similar or corresponding elements between the first and second embodiment.

Contrary to Figure 1, Figure 3 is not a cross-sectional view, but a schematic front view according to plane parallel to the plane of Figure 1 relating to the first embodiment.

Preferably, according to the second embodiment, the loops 26 are formed by one single wire 28.

The spring assembly 12 may further comprise a twisting mechanism 42 moveable around the central axis X so as to twist the loops 26. In particular, the twisting mechanism 42 is configured for rotating the ends 30 of the wire 28 around the central axis X, for example as illustrated by arrows F in Figures 3 and 4. This allows in particular modifying a number of loops 26 of the spring assembly 12, wherein the loops 26 are formed by the wire 28. For example, a rotation of 360° of one of the ends 30 around the central axis X adds an additional loop 26 to the spring system 24 and reduces the diameter of each loop 26. This modifies thus in particular the spring rate of the spring assembly 12.

The twisting mechanism 42 comprises for example two discs 44 extending parallel to each other and being fixed to the respective ends 30 of the single wire 28, for example by fixing patches 46. In Figure 4, one of the discs 44 is visible only, and illustrated by a dotted surface.

Referring again to Figure 3, the fixing patches 46 may for example fix each corresponding end 30 to a circumferential outer face of the corresponding disc 44. Each fixing patch 46 may comprise for example a screw, not shown, for fixing the corresponding end 30 to the disc 44. According to other examples, each fixing patch 46 corresponds to a connection by welding or gluing between the end 30 and the corresponding disc 44.

The twisting mechanism 42 further comprises for example a rod 48, in particular a threaded rod, connecting the two discs 44. The rod 48 extends according to the central axis X. The rod 48 is in particular configured to adjust each disc 44 in a rotational position around the central axis. X. In particular, the rod 48 forms the rotation axis of the discs 44 when the twisting mechanism 42 is actuated. In addition or according to an alternative, the rod 48 is configured to adjust each disc 44 in a translational position along the central axis X.

For example, the rod 48 traverses a central hole of each disc 44. For example, the rod 48 may present a threaded surface, and each central hole may present a complementary threaded surface, so that the rod 48 is connected by screwing to the discs 44. For example, the rod 48 may be fixed in a rotational position with respect to the discs 44, for example by corresponding fixing means, such nuts, not shown in the Figures.

The spring assembly 12 according to the invention presents many advantages.

The spring assembly 12 allows easily adjusting the diameter of the loops 26 of the wire 28 and/or the numbers of loops 26, so as to obtain for example a required spring rate and/or a required damping rate. Such adjustment allows for example calibrating the spring assembly 12 already arranged in place, and to obtain a desired spring rate and/or damping rate providing optimal damping characteristics. This allows in particular to lower or suppress vibrations and accelerations of a given frequency for example if the spring assembly 12 forms a tuned mass damper. For example, the spring assembly 12 allows shifting an oscillation or vibration of the first and/or second components 14, 16 from a critical frequency spectrum, for example a spectrum close to a resonance frequency, to a non-critical frequency spectrum.

The features of the first and second embodiments may be combined in any technical feasible manner. For example, the spring assembly 12 according to the second embodiment may comprise several separate wires 28 instead of one single wire 28. The spring assembly 12 according to the second embodiment may also comprise the first and/or second fixing devices 32, 33.

## Claims

1. A spring assembly (12) configured for connecting a first component (14) to a second component (16), the spring assembly (12) comprising a first rail (20) configured to be fixed to the first component (14) and a second rail (22) facing the first rail (20) and configured to be fixed to the second component (16), the spring assembly (12) further comprising a spring system (24) comprising a plurality of loops (26) formed by at least one wire (28) and defining a central axis (X) extending substantially parallel to the first and/or second rail (20, 22),
**characterized in that**
the spring assembly (12) comprises a plurality of fixing devices (32, 33) for fixing the loops (26) to the first rail (20) and/or to the second rail (22), a diameter of each loop (26) being individually adaptable by the corresponding fixing device (32, 33), and/or
the spring assembly (12) comprises a twisting mechanism (42) moveable around the central axis (X) so as to twist the loops (26).

2. The spring assembly (12) according to claim 1, wherein each fixing device (32, 33) comprises at least one plate (34) and a screw (36) configured for applying a force to the plate (34) so as to fix the at least one wire (28) in a fixing position.

3. The spring assembly (12) according to claim 1 or 2, wherein the screw (36) of each fixing device (32, 33) is adapted to apply the force to the plate (34) independently of an application of a force of each screw (36) of the other or each other fixing device (32, 33) of the plurality of fixing devices.

4. The spring assembly (12) according to any of the preceding claims, wherein each plate (34) presents at least one notch (38) adapted for receiving a part of the at least one wire (28).

5. The spring assembly (12) according to claim 4, wherein at least one of the fixing devices (32) comprises two plates (34), each plate (34) presenting the at least one notch (38), wherein the notches (38) of the two plates (34) face each other and receive the part of the at least one wire (28).

6. The spring assembly (12) according to any of the preceding claims, further comprising a plurality of adjustment screws (40) configured for fixing the first rail (20) to the first component (14) and/or the second rail (22) to the second component (16).

7. The spring assembly (12) according to any of the preceding claims, wherein each loop (26) is formed by a respective wire (28).

8. The spring assembly (12) according to any one of claims 1 to 6, wherein the loops (26) are formed by one single wire (28).

9. The spring assembly (12) according to claim 8, wherein the twisting mechanism (42) comprises two discs (44) extending parallel to each other and being fixed to respective ends (30) of the single wire (28).

10. The spring assembly (12) according to claim 9, wherein the twisting mechanism (42) further comprises a rod (48) connecting the two discs (44), wherein the rod (48) extends according to the central axis (X), preferably wherein the rod (48) is configured to adjust each disc (44) in a rotational position around the central axis (X) and/or in a translational position along the central axis (X).

11. The spring assembly (12) according to any of the preceding claims, forming a tuned mass damper configured for damping vibrations between the first component (14) and the second component (16).

12. Equipment (10) for a power plant comprising a first component (14) and a second component (16), further comprising a spring assembly (12) according to any one of the preceding claims, wherein the first rail (20) is fixed to the first component (14) and the second rail (22) is fixed to the second component (16).

## Amended claims

### Amended claims in accordance with Rule 137(2) EPC.

1. A spring assembly (12) configured for connecting a first component (14) to a second component (16), the spring assembly (12) comprising a first rail (20) configured to be fixed to the first component (14) and a second rail (22) facing the first rail (20) and configured to be fixed to the second component (16), the spring assembly (12) further comprising a spring system (24) comprising a plurality of loops (26) formed by at least one wire (28) and defining a central axis (X) extending substantially parallel to the first and/or second rail (20, 22),
**characterized in that**
the spring assembly (12) comprises a plurality of fixing devices (32, 33) for fixing the loops (26) to the first rail (20) and/or to the second rail (22), a diameter of each loop (26) being individually adaptable by the corresponding fixing device (32, 33), each fixing device (32, 33) comprising at least one plate (34) and a screw (36) configured for applying a force to the plate (34) so as to fix the at least one wire (28) in a fixing position, and/or
the spring assembly (12) comprises a twisting mechanism (42) moveable around the central axis (X) so as to twist the loops (26).

2. The spring assembly (12) according to claim 1, wherein the screw (36) of each fixing device (32, 33) is adapted to apply the force to the plate (34) independently of an application of a force of each screw (36) of the other or each other fixing device (32, 33) of the plurality of fixing devices.

3. The spring assembly (12) according to claim 1 or 2, wherein each plate (34) presents at least one notch (38) adapted for receiving a part of the at least one wire (28).

4. The spring assembly (12) according to claim 3, wherein at least one of the fixing devices (32) comprises two plates (34), each plate (34) presenting the at least one notch (38), wherein the notches (38) of the two plates (34) face each other and receive the part of the at least one wire (28).

5. The spring assembly (12) according to any of the preceding claims, further comprising a plurality of adjustment screws (40) configured for fixing the first rail (20) to the first component (14) and/or the second rail (22) to the second component (16).

6. The spring assembly (12) according to any of the preceding claims, wherein each loop (26) is formed by a respective wire (28).

7. The spring assembly (12) according to any one of claims 1 to 5, wherein the loops (26) are formed by one single wire (28).

8. The spring assembly (12) according to claim 7, wherein the twisting mechanism (42) comprises two discs (44) extending parallel to each other and being fixed to respective ends (30) of the single wire (28).

9. The spring assembly (12) according to claim 8, wherein the twisting mechanism (42) further comprises a rod (48) connecting the two discs (44), wherein the rod (48) extends according to the central axis (X), preferably wherein the rod (48) is configured to adjust each disc (44) in a rotational position around the central axis (X) and/or in a translational position along the central axis (X).

10. The spring assembly (12) according to any of the preceding claims, forming a tuned mass damper configured for damping vibrations between the first component (14) and the second component (16).

11. Equipment (10) for a power plant comprising a first component (14) and a second component (16), further comprising a spring assembly (12) according to any one of the preceding claims, wherein the first rail (20) is fixed to the first component (14) and the second rail (22) is fixed to the second component (16).
